(19) Europäisches Patentamt
European Patent Office
Office européen des brevets

(11) **EP 4 462 317 A1**

(12) **EUROPEAN PATENT APPLICATION**

(43) Date of publication:
**13.11.2024 Bulletin 2024/46**

(21) Application number: **23213981.6**

(22) Date of filing: **04.12.2023**

(51) International Patent Classification (IPC):
***G06N 10/40*** *(2022.01)* ***G06N 10/20*** *(2022.01)*

(52) Cooperative Patent Classification (CPC):
**G06N 10/40;** G06N 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.05.2023 EP 23172921**
**14.06.2023 EP 23020289**
**22.08.2023 EP 23192636**

(71) Applicant: **Kipu Quantum GmbH**
**76137 Karlsruhe (DE)**

(72) Inventors:
• **Kumar, Shubham**
**Ranchi 834002 (IN)**

• **Hegade, Narendra Narayana**
**Bengaluru, Karnataka 560099 (IN)**
• **Alvarado Barrios, Gabriel**
**Guangzhou (CN)**
• **Solano, Enrique**
**10405 Berlin (DE)**

(74) Representative: **Hoppe, Georg Johannes**
**Darani Anwaltskanzlei**
**Hohenzollerndamm 117**
**14199 Berlin (DE)**

Remarks:
A request for correction has been filed pursuant to Rule 139 EPC. A decision on the request will be taken during the proceedings before the Examining Division (Guidelines for Examination in the EPO, A-V, 3.).

(54) **DIGITAL-ANALOG QUANTUM COMPUTING METHOD OF FERMION-BOSON MODELS IN SUPERCONDUCTING CIRCUITS**

(57) The invention relates to a computer-implemented method, to a computer program, and to a computer device as described herein.

In particular, the invention relates to a hybrid digital-analog method for simulating fermion-boson interactions using superconducting circuits, where the target Hamiltonian consists of tunnelling (exchange) interactions, the Coulomb repulsion, and the individual electron and phonon terms such as the Hubbard-Holstein model, Hubbard model, Holstein model, and Bose-Hubbard model.

The target Hamiltonian $H$ is simulated using a superconducting architecture by making use of the natural interactions provided by the device as analog blocks and applying digital pulses to engineer the digital blocks in the form of single and multi-qubit gates. This hybrid method tends to reduce the resource cost in terms of the number of quantum gates. To simulate the dynamics, the Trotterization method is applied given by

$$e^{-iH\tau} \simeq \left(\prod_{j=1}^{K} e^{-iH_j\tau/n}\right)^n + O(K^2\tau^2/n),$$

where $K$ is the number of Hamiltonian terms, $n$ is the number of trotter steps, and $\tau$ is the evolution time.

## Description

The invention relates to quantum computing. Specifically, embodiments of the invention is defined by the appended claims.

The invention also relates to a method, in particular to a computer-implemented method for simulating fermion-boson systems with superconducting circuits. In particular embodiments, the method is based on digital-analog quantum computation (DAQC).

## Background of the Invention

Quantum computing is a framework for computation, which aims at outperforming classical computation by exploiting quantum mechanical phenomena. Analog quantum computing refers to a method of quantum computation that utilizes continuous variables or properties of quantum systems to perform computations. In contrast to digital quantum computing, which uses discrete quantum qubits to encode information, analog quantum computing often involves manipulating continuous quantum variables, for example the position and momentum of particles, the control field amplitudes and phase of quantum states in quantum systems. This approach aims to perform computations by directly encoding and processing information using the continuous properties of quantum systems. These systems can represent and manipulate information using the continuous properties of quantum states, potentially offering advantages in certain computational tasks compared to digital quantum computing.

In analog quantum computing, the concept of a qubit, as traditionally understood in digital quantum computing, is somewhat different due to the continuous-variable nature of analog quantum systems. In digital quantum computing, a qubit is the basic unit of information and is represented as a two-level quantum system, generally denoted by $|0\rangle$ and $|1\rangle$). It can exist in a superposition of states, allowing it to encode and process information in quantum algorithms, e.g.,

$$\frac{(|0\rangle + |1\rangle)}{\sqrt{2}}$$

. This plays an important role in the development of quantum algorithms outperforming classical algorithms. One example of the physical device that may be used as a qubit is an electron spin.

In analog quantum computing, qubits are not discrete entities like in digital quantum computing. Instead, continuous-variable quantum systems are utilized, and the basic unit of information is often represented by continuous quantum variables such as the position, momentum, or field amplitudes of the quantum system. These continuous variables serve as the analog counterpart to the qubit. For instance, in systems that utilize continuous-variable quantum states, properties such as the continuous amplitudes of light or the continuous degrees of freedom of quantum harmonic oscillators can be manipulated and processed to perform computations. These continuous variables play a role analogous to qubits in digital quantum computing.

Moreover, in analog quantum computing, the time evolution of qubits or continuous variables is typically described by quantum mechanical operators and equations, and it can be visualized by considering how these continuous variables change and interact with each other over time. The time evolution of quantum states under a Hamiltonian operator involves the use of quantum dynamics governed by Hamiltonians. It is described by the Schrödinger equation which is a fundamental equation in quantum mechanics. For continuous-variable systems, this equation might involve operators corresponding to position, momentum, or other continuous variables representing the system. For example, in systems involving continuous-variable quantum optics or harmonic oscillators, the evolution of field amplitudes or modes might be described by differential equations representing the dynamics of these variables under specific Hamiltonians.

In digital quantum computing, quantum gates are fundamental operations that manipulate qubits by performing specific transformations on their quantum states. These gates are crucial for performing computations and implementing quantum algorithms. However, in analog quantum computing, the operations and transformations are not discretely applied gates as in digital quantum computing. Instead of discrete quantum gates acting on individual qubits, analog quantum computing typically involves continuous operations and transformations on the continuous variables that represent the quantum states. These operations are more akin to continuous transformations, such as squeezing, displacing, or evolving the continuous properties of the quantum system over time using Hamiltonians or continuous-variable operations.

The handling and manipulation of these continuous quantum variables in analog quantum computing are different from the discrete operations performed on qubits in digital quantum computation. Analog quantum computing harnesses continuous variables, offering natural handling of continuous data and precision in computations. It holds promise for efficient quantum simulation, potential error resilience, resource efficiency in certain computational tasks, high-precision measurements in sensing and metrology, and diversification of algorithms for specific computational problems. However, it is an evolving field facing challenges like error correction and scalability, with researchers working to unlock its full potential compared to digital quantum computing.

In general, while the concept of gates as discrete operations on qubits is not directly applicable in analog quantum computing, there are analogs in the form of continuous operations or transformations that affect the continuous variables characterizing a quantum system's state. These continuous transformations play a role in manipulating and evolving the quantum information encoded in the continuous-variable quantum systems, enabling computation in an analog context. Furthermore, the implementations of analog quantum computing vary between different quantum computer architectures.

**Short Description of the Invention**

This summary is provided to introduce a selection of concepts in a simplified form that are further described below in the detailed description. This summary is not intended to identify key features of the invention, nor is it intended to be used to limit the scope of the invention.

The object of the invention is to provide a method for investigating the properties of a material.

This object is achieved by the invention. The invention provides a digital-analog quantum simulation protocol using superconducting circuits, in particular to study correlated fermion-boson systems, for applications in investigating the properties of materials identified with strong fermion-boson correlation effects. Other aspect of the invention relates to quantum chemistry, machine learning, finance and optimization.

This object is also achieved, for example, by the features of the appended claims. Further embodiments and examples are apparent from the dependent claims, the detailed description, and the accompanying drawings of the figures. In particular, the method provides an improved design of continuous quantum variables.

In a first aspect, the invention pertains to a computer-implemented method for for determining a property of a material by performing a quantum simulation of a fermion-boson system using a superconducting circuit device.

In certain embodiments, the method comprises:

- providing a target Hamiltonian for encoding an electron-phonon interaction system representing a property of the material,
- mapping the target Hamiltonian into a 1D spin chain using a Jordan-Wigner transformation, wherein each spin is locally coupled to a resonator,
- providing a superconducting circuit implementing a tunable (native) interaction between spins and bosons as well as tunable exchange interactions between spins and
- simulating the dynamics of the fermion-boson system using a digital-analog quantum algorithm.

The target Hamiltonian is simulated using the superconducting circuit by using the native spin-boson interaction of the superconducting circuit as analog blocks and using the tunable interactions between spins for constructing digital blocks in the form of single and multi-qubit gates.

Subsequently, the property of the material is derived.

In other words, the property of the material is studied from a digital-analog quantum simulation of a fermion-boson model implemented on a superconducting circuit.

The superconducting circuit (i.e. the quantum device) implements tunable interactions that allows to simulate the properties of a material. These interactions are activated in a particular sequence which corresponds to the digital-analog algorithm for the simulation.

In certain embodiments of the method of the invention, the target Hamiltonian comprises tunnelling (exchange) interactions, Coulomb repulsion, and/or individual electron and phonon terms, in particular a Hubbard-Holstein model, a Hubbard model, a Holstein model, or a Bose-Hubbard model.

In certain embodiments of the method of the invention, the circuit elements of the superconducting circuit comprises qubits, resonators and/or SQUIDs, wherein an magnetic flux is supplied to the SQUIDs to control the interactions in the circuit.

In certain embodiments of the method of the invention, the linear chain mapping, in particular a 1D linear chain mapping, of electron-phonon interactions is performed, in particular using a Jordan-Wigner transformation.

The target Hamiltonian is to be simulated. In its original form it cannot be directly simulated, so a mathematical transformation, in particular the Jordan-Wigner transformation is performed to take it into a form that can be addressed by the algorithm. The algorithm requires that certain interactions are activated in a particular sequence in order to simulate all the terms of the target Hamiltonian. Then, the superconducting circuit is controlled to reproduce the sequence of interactions required by the algorithm.

The Hamiltonian in its original form may be written in terms of fermionic and bosonic operators. These are mapped into spin operators (i.e. the qubits in the superconducting circuit) by means of a Jordan-Wigner transformation. The bosonic operators can be directly represented by a resonator (physically, it is a LC-circuit described by a quantum harmonic oscillator) and do not need a particular transformation.

In certain embodiments of the method of the invention, a Hamiltonian of the superconducting circuit is provided that is decomposed into interactions that are used for the digital blocks and for the analog blocks.

In certain embodiments of the method of the invention, the interaction between the qubits and the resonators is used for the analog blocks, and is designed to be equal to the spin-boson interaction in the target Hamiltonian up to single qubit rotations, and

In certain embodiments of the method of the invention, the interactions between the qubits are used for the digital blocks in the form of single and/or multi-qubit gates.

In certain embodiments of the method of the invention, the Hamiltonian that describes the superconducting circuit considers several tunable interactions that need to be activated and deactivated in a particular sequence in order to approximate the target Hamiltonian using a trotterization method.

In particular, the interactions that are transformed are chosen from the group consisting of exchange interaction and Coulomb interaction between fermions.

In certain embodiments of the method of the invention, the interactions are exchange and/or Coulomb interactions comprising the digital blocks and bosonic and fermi-bosonic interactions comprising the analog blocks.

Some interactions present in the superconducting circuit are already almost identical to some of the interactions in the target Hamiltonian, these interactions compose the analog blocks. On the other hand, some interactions in the superconducting circuit need to be applied (or combined) in a particular sequence to replicate the remaining interactions in the target Hamiltonian.

A target Hamiltonian is to be simulated. However, in its original form it cannot be directly simulated, so mathematical transformations are performed, in particular a Jordan-Wigner transform mentioned to take it into a form that can be addressed by the algorithm. The algorithm requires that certain interactions are activated in a particular sequence in order to simulate all the terms of the target Hamiltonian. Then, the superconducting circuit is controlled in order to reproduce the sequence of interactions required by the algorithm.

In certain embodiments of the method of the invention, the superconducting circuit is a 1D superconducting circuit.

In certain embodiments of the method of the invention, the property of the material is selected from the group consisting of transport properties, correlation effects, polaron formation, bipolaron formation and localization phenomena.

In a second aspect, the invention pertains to a computer program having a program code for performing the method of one of the aforementioned claims, when the computer program is executed on a computer, a processor, a quantum-processing unit and/or a programmable hardware component.

In a third aspect, the invention pertains to a computation device comprising: an interface for communicating with a quantum-processing unit; and one or more processors configured to perform the aforementioned method using the quantum-processing unit.

In a fourth aspect, the invention pertains to the use of a superconducting state for quantum computation with superconducting circuits.

In a fifth aspect, the invention pertains to a superconducting circuit device for investigating a property of a material, in particular by performing a quantum simulation of a fermion-boson system. In certain embodiments, the superconducting circuit device comprises:

qubits, resonators and/or SQUIDs, wherein a magnetic flux is supplied to the SQUIDs to control the interactions in the circuit.

## Detailed Description of the Invention

Various embodiments of the invention are further described in more detail with reference to the accompanying drawings. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

Fermion-boson interactions

Fermion-boson interactions encompass the interactions that arise between fermions, i.e. particles characterized by half-integer spins, as exemplified by electrons-and bosons-particles with integer spins. These interactions manifest in diverse physical domains, including the realms of particle physics and condensed matter physics. A prominent illustration lies in the interplay between electrons (fermions) and photons (bosons), constituting the foundational force behind electromagnetic interactions that underpin our observable universe. Additionally, within the context of the strong nuclear force, fermions such as quarks interact through the exchange of gluons (bosons), facilitating the powerful binding of protons and neutrons within atomic nuclei. This intricate interplay of fermion-boson interactions not only shapes the fundamental forces governing our universe but also serves as a cornerstone in comprehending the dynamic nature of matter and energy.

Electron-phonon (e-ph) interaction models are essential tools for understanding and manipulating charge and energy flow in various electronic, photonic, and energy conversion devices. These models are important to study conventional superconductivity and charge modulation. For ideal 1-D systems, any electron-phonon coupling leads to a charge density wave. Electron-phonon interactions play an important role in high-temperature superconductivity through the formation of polarons or bipolarons.

Strong e-ph interactions and electron-phonon coupling can both lead to substantial correlation effects and localization in metallic systems in condensed matter. Strong e-ph interactions have been found in a number of significant materials, including cuprates, fullerides, and manganites. The interplay of electron-electron (e-e) and e-ph interactions in these correlated systems leads to the coexistence or competition between various phases such as superconducting, charge-density-wave or spin-density-wave phases, or formation of novel non-Fermi liquid phases, polarons, bipolarons, etc. Moreover, it can be a dominant factor in determining the transport properties of biomolecules.

## Hubbard-Holstein model

The Hubbard-Holstein model describes a system of interacting electrons that also couple to a set of harmonic oscillators representing phonons. The model includes the on-site Coulomb repulsion between electrons, which tends to localize the electrons and prevent them from occupying the same site, and the electron-phonon interaction, which causes the phonons to modulate the local energy landscape of the electrons and can lead to a net attraction between them.

Despite its simplicity, the Hubbard-Holstein model is a highly nontrivial problem and cannot be solved exactly in one dimension, or even in higher dimensions, except for some special cases. The difficulty arises from the fact that the interaction between the electrons and phonons is highly nonlinear, and the Coulomb interaction between the electrons leads to strong correlations and many-body effects.

## Jordan-Wigner transformation

The Jordan-Wigner transformation is a method used in quantum mechanics to map fermionic operators to spin operators, facilitating the simulation of fermionic systems on quantum computers. It converts fermionic annihilation and creation operators, which obey anticommutation relations, into tensor products of Pauli matrices that operate on spin-1/2 systems (like qubits).

## Quantum Simulations

Simulation of such correlated systems is a daunting task given that their Hilbert space grows exponentially with the size of the system. Quantum simulation aims to address this problem by encoding the system into the subspace of a controllable quantum system.

Quantum simulators are controllable quantum systems that may be used to mimic other quantum systems of relevance and have garnered renewed and growing attention. The employment of efficient quantum simulators with low error rates would be highly beneficial for a range of physics, chemistry, and biology issues. They have demonstrated their ability to solve challenging quantum many-body issues in condensed-matter physics, such as those involving correlated electrons or quantum magnetism. In order to predict or study states of matter that are challenging to reach experimentally, quantum simulators are quite useful.

Quantum simulators are basically of three types: digital, analog, and digital-analog. The digital quantum simulation is limited by high error rates while the analog quantum simulation does not offer much flexibility since it is applicable to specific types of systems. On the other hand, digital-analog quantum simulation merges the two approaches to realize low error and high-performance computations.

Digital quantum computing (DQC) is based on the application of sequences of single-qubit and multi-qubit gates. These operations are termed "digital blocks" and the protocol is known as a digital quantum algorithm. DQC is limited by the fact that it is resource-consuming and does not display robustness to errors in the computation. This makes DQC challenging to implement important and complex problems and reach quantum advantage.

Analog quantum computing (AQC) involves simulators that can emulate the desired physical system as closely as possible by mimicking its dynamic and statistical properties. The aim is to design a simulator whose Hamiltonian can be engineered to match the properties of the target system. Such systems offer low errors and scalability. The tradeoff is that such simulators are only limited to specific quantum systems and do not offer much flexibility.

Digital-analog quantum computing (DAQC) aims to combine the digital and analog methods in terms of digital pulses and natural interactions provided by the system to produce efficient simulations with low error and high flexibility. DAQC exhibits superior scalability than solely digital approaches in the same NISQ devices by combining digital methods, which offer flexibility, with analog approaches, which are robust against errors. In line with the noisy intermediate scale quantum era (NISQ), this hybrid approach seeks to minimize the number of quantum gates required for computation.

DAQC takes advantage of the inherent interactions offered by the platform system's Hamiltonian along with single-qubit rotations to perform efficient computation. The native interactions provide the analog part of the simulation while the single and multi-qubit gates provide the digital part. The task is to find a mapping between these digital and analog blocks and the target Hamiltonian to be simulated. Different platforms provide different sets of analog and digital blocks and hence a suitable mapping needs to be implemented. In the method of the invention, different terms such as individual qubit or resonator and qubit-resonator interactions, offered by the digital-analog simulator can be turned on or off to reach the target Hamiltonian. This feature is also the source of error in the simulation which can be mitigated using some known techniques.

DAQC has been used to propose the realistic implementation of the quantum Fourier transform, the quantum approximate optimization algorithm (QAOA), in the simulation of fermionic models and for the simulation of quantum chemistry and transport phenomena in biomolecules. This hybrid method is expected to perform better than digital quantum computing in terms of producing low error and high performance.

In one aspect, the invention refers to a method for simulating fermion-boson interaction problems as described herein. In certain embodiments, the invention can also be applied in chemistry for quantum simulations. Such simulation problems may refer to complex electronic structures in atoms and molecules.

The method is applicable to study systems with strong electron-phonon interactions that may be studied with the present invention in particular embodiments are phenomena prevalent in various materials, condensed matter systems, and biomolecules where the idea is to efficiently simulate such systems using a digital-analog quantum device that requires fewer resource costs in comparison to purely digital or analog quantum device.

An electron-phonon interaction is considered "strong" if the strength of the interaction is comparable to the transfer amplitude between nearest-neighbor fermionic sites or to the phonon frequency.

The term fermion is defined as a particle obeying Fermi-Dirac statistics for half-integer spin, and therefore are subject to Pauli's exclusion principle.

The term boson is defined as a particle obeying Fermi-Dirac statistics for integer spin.

The electron-phonon systems include models such as the Hubbard-Holstein model that involves both the electron-phonon couplings and the coulomb interactions between the electrons, the Holstein model that excludes Coulomb repulsion between the electrons and the phenomena of charge transport in biomolecules.

The target Hamiltonian (also referred to here as problem Hamiltonian) is the Hamiltonian that needs to be mapped using the superconducting architecture proposed and simulated by applying the DAQC method.

The circuit Hamiltonian is the Hamiltonian of the superconducting circuit architecture obtained after circuit quantization.

An expectation value is a mean value obtained after several repetitions of single experimental measurements of a physical quantity in a quantum experiment.

A quantum gate is a fixed unitary evolution. An example is a multi-qubit operation,

$$U_N = e^{i\pi/4}\sigma_1^z\sigma_2^z.$$

A digital block is a fixed unitary evolution up to a set of local rotations. The examples are parameter-fixed entangling quantum gates and single qubit rotations with arbitrary angles as

$$U_N(\phi) = (e^{i\phi_1\sigma_1^z} \otimes e^{i\phi_2\sigma_2^z})e^{i\pi/4}\sigma_1^z\sigma_2^z,$$

and

$$U_i(\phi) = e^{i\phi\sigma_1^z}.$$

An analog block is a parameterized entangling unitary evolution. An example is a parameter-dependent multiqubit operation

$$U_A(\phi) = e^{i\phi}\sigma_1^z\sigma_2^z.$$

Native nearest neighbor or all-to-all interactions can serve as an analog block as in the case of Ising Hamiltonian. In the case of hybrid fermion-boson systems, the native boson terms and fermi-boson interaction terms can be employed as analog blocks.

Superconducting quantum circuits use Josephson junctions to realize qubits and their parallel connections to realize superconducting quantum interference devices (SQUIDs). Quantum computation with superconducting circuits exploits the intrinsic coherence of the superconducting state, into which all electrons are condensed. The number of superconducting electrons stores the quantum information. These systems are fabricated with thin film technology and operated at temperatures below 100 mK. Measurements are performed with integrated on-chip instruments. The access to macroscopic parameters allows tuning the system properties such as frequency and coupling strength and offers better scalability than other quantum platforms.

Quantization of superconducting circuits involves calculating the Lagrangian of the system, then using Hamilton's equation of motions to derive the classical Hamiltonian which is quantized by promoting the variables to operators satisfying canonical commutation relations.

The computer-implemented method for simulating a system, in particular for simulating a fermion-boson interacting system, comprises the design of a suitable superconducting circuit architecture mapped to the target system. The target system can be, for example, an electron-phonon system whose Hamiltonian is described as

$$H = -t\sum_{i,\sigma}\left(c_{i,\sigma}^{\dagger}c_{i+1,\sigma} + c_{i+1,\sigma}^{\dagger}c_{i,\sigma}\right) + U\sum_i n_{i\uparrow}n_{i\downarrow} + g\sum_{i,\sigma}n_{i\sigma}\left(a_i + a_i^{\dagger}\right) + \hbar\omega_0\sum_i a_i^{\dagger}a_i,$$

where $t$ is the tunneling amplitude between sites, $U$ is the Coulomb repulsion, $\omega_0$ is the frequency of the phonon modes, $g$ is the coupling strength between electrons and phonons, $c_{i\sigma}^{\dagger}(c_{i\sigma})$ creates (annihilates) an electron with spin $\sigma \in \{\uparrow,\downarrow\}$ at the site $i$, $a_i^{\dagger}(a_i)$ is the phononic creation (annihilation) operator, and $n_{i\sigma} = c_{i\sigma}^{\dagger}c_{i\sigma}$ the electronic number operator.

The superconducting architecture considered to simulate this target Hamiltonian consists of a linear chain of qubits coupled with resonators and superconducting quantum interference devices (SQUIDs) that emulate a system of a 1D linear system of electronic spins coupled via phonons. The quantum Hamiltonian of the superconducting architecture is obtained via circuit quantization and then mapped with this target Hamiltonian. The various digital and analog blocks offered by the superconducting architecture are identified based on what interactions that are engineered using digital pulses and what are the natural interactions available. The combination of these blocks constructs a digital-analog protocol for the simulation. Each SQUID is used for coupling a pair of qubits and a resonator so that the coupling parameters of these qubit-resonator interactions can be changed using external fluxes supplied through the SQUIDs.

After decomposing the problem Hamiltonian into digital and analog blocks, it is time evolved using the Trotter-Suzuki formula. Quantum Fidelity is calculated to benchmark the simulation results.

In particular, digital-analog quantum computing is performed using superconducting circuits.

Simulation procedure

In some embodiments, the hybrid digital-analog method to perform quantum simulation of electron-phonon interactions comprises or consists of tunnelling (exchange) interactions, the Coulomb repulsion, and the individual electron and phonon terms. Examples of such systems are the generalized Hubbard-Holstein model incorporating both the electron-phonon couplings and the coulomb interactions between the electrons, the Hubbard model that excludes electron-phonon couplings, the Holstein model that excludes Coulomb repulsion between electrons and the Bose-Hubbard model that involves interacting spinless bosons on a lattice.

In some embodiments, when applied for digital-analog quantum computing, the method uses a target Hamiltonian that needs to be encoded into a superconducting circuit architecture consisting of qubits coupled by resonators and SQUIDs. In some embodiments, digital-analog quantum computing is performed in the method using superconducting circuits, in particular with qubits coupled with resonators and SQUIDs in a 1D linear chain architecture.

In some embodiments of the method, for digital-analog quantum computing, a 1D linear chain mapping of electron-phonon interactions is performed using Jordan-Wigner transformation and a corresponding 1D linear chain architecture is designed using superconducting circuits for quantum simulation.

In some embodiments of the method for superconducting circuits, it comprises providing an architecture according to the 1D linear chain electron-phonon interactions and based on the mapped target Hamiltonian suitable for encoding electron-phonon interacting systems and simulated using digital-analog quantum algorithm.

The superconducting architecture is mapped to the target Hamiltonian and simulated using digital-analog methods.

In certain embodiments of the method, the Hamiltonian of the superconducting architecture is decomposed into digital and analog blocks by separating the natural interactions with the interactions that need to be transformed to reach the target Hamiltonian, in particular followed by a Trotterization of each block.

In certain embodiments of the method of the invention, the computation involves decomposing the mapped Hamiltonian into different digital blocks, consisting of terms that need to be supplied with digital pulses and the analog blocks consisting of the natural interactions provided by the architecture. After this decomposition, the Trotter-Suzuki method is applied for the simulation.

The Trotterization of the superconducting circuit Hamiltonian may be performed to simulate the target Hamiltonian.

In certain embodiments of the method of the invention, the dynamics of polaron and bipolar formations are studied using the superconducting architecture for simulating electron-phonon interactions.

In certain embodiments of the method of the invention, any of the preceding claims, implemented on analog hardware using digital pulses superimposed on the native analog block of the hardware.

In certain embodiments of the method of the invention, the quantum fidelity of the simulation is considered for benchmarking the simulation results of the digital-analog method with respect to purely digital or analog methods.

In another aspect, the invention refers to the application of the method described herein in quantum chemistry and materials.

In another aspect, the invention refers to a system for performing a method described herein, comprising

- a superconducting quantum architecture, and
- digital-analog quantum simulation protocol to efficiently simulate the target Hamiltonian with high fidelity.

In another aspect, the invention refers to a computer program having a program code for performing the method as described herein, when the computer program is executed on a computer, a processor, a quantum processor, and/or a programmable hardware component.

In another aspect, the invention refers to a computation device comprising: an interface for communicating with a quantum-processing unit; and one or more processors configured to perform the method described herein using the quantum processor.

In another aspect, the invention refers to the use of superconducting qubits and resonators for quantum computation with superconducting circuits.

In another embodiment, the invention refers to a method, in particular a computer-implemented method, for simulating electron-phonon interacting systems, comprising the step of - providing a superconducting circuit architecture with tunable coupling for encoding electron-phonon interacting systems.

Tunable parameters of the proposed device may be the qubit-resonator coupling and parameters of the qubits and resonators.

In certain embodiments, the invention refers to a method for solving a considered problem, comprising the step of:

- Using an arbitrary number of qubit-resonator coupling in superconducting circuits platform with tunable coupling for encoding a considered problem, in particular wherein a target Hamiltonian is given corresponding to the system to be simulated.
- An arbitrary number of qubit-resonator coupling refers to any integer value. The minimum number of qubits is 2, and the minimum number of resonators and SQUID is 1.

In another aspect, the invention refers to the use of the method described herein in quantum chemistry and materials.

In another aspect, the invention refers to a computer program having a program code for performing the method described herein, when the computer program is executed on a computer, a processor, a quantum-processing unit, and/or a programmable hardware component.

In another aspect, the invention refers to a computation device comprising: an interface for communicating with a quantum-processing unit; and one or more processors configured to perform the aforementioned method using the quantum-processing unit.

In another aspect, the invention relates to a data processing apparatus/device/system comprising means for carrying out the method of the invention as described herein.

In particular, the invention relates to a method for performing quantum simulation of electron-phonon systems described herein, comprising

- a quantum simulator with tunable coupling,
- a memory to save the results of the measurements of states and expectation values of a final Hamiltonian.

In another embodiment, the invention refers to a method, in particular a computer-implemented method, for simulating fermion-boson interacting systems using a digital-analog quantum algorithm in superconducting circuits.

In another aspect, the invention refers to a system comprising

- a superconducting circuit device with tunable coupling and free energies,
- a digital-analog quantum computing method to efficiently simulate the target Hamiltonian.

In another aspect, the invention refers to the use of the method described herein in quantum chemistry and materials.

In another aspect, the invention refers to a computer program having a program code for performing the method of one of the before mentioned claims, when the computer program is executed on a computer, a processor, a quantum-processing unit and/or a programmable hardware component.

In another aspect, the invention refers to a computation device comprising: an interface for communicating with a quantum-processing unit; and one or more processors configured to perform the aforementioned method using the quantum-processing unit.

In another aspect, the invention relates to a computer program (product) comprising instructions which, when the program is executed by a computer, cause the computer to carry out the method of the invention as described herein.

In another aspect, the invention relates to a computer-readable data carrier having stored thereon said computer program (product).

In another aspect, the invention relates to the use of a superconducting state for quantum computation with superconducting circuits.

**Figures**

The figures show:

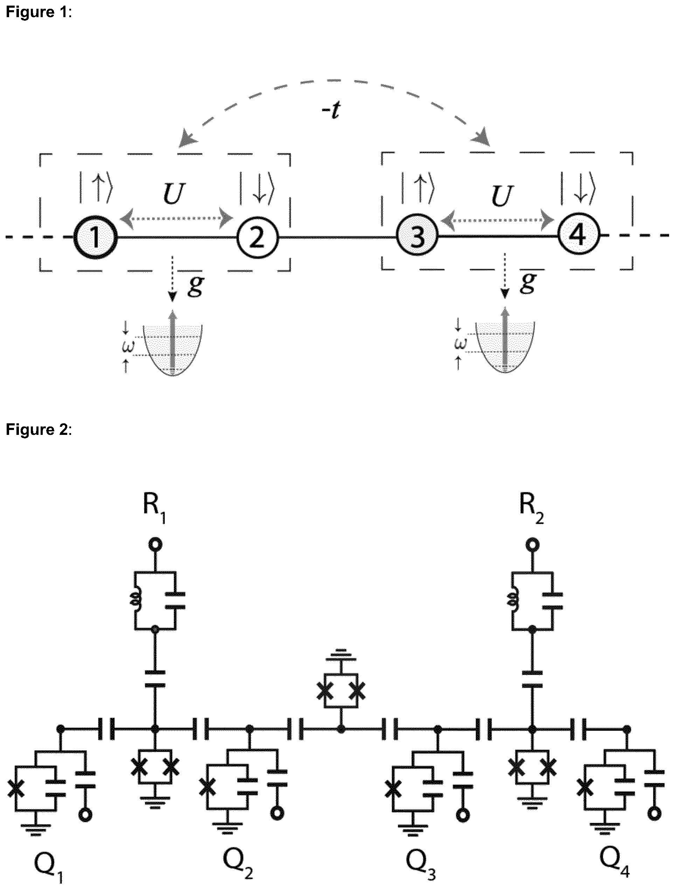

**Figure 1:** 2-site Hubbard-Holstein model in spin representation with each site decomposed into two opposite spins interacting with phonon modes (represented by harmonic potentials). Intersite interactions are mediated via tunneling terms while intrasite interactions are mediated via Coulomb (U) and spin-phonon terms.

**Figure 2:** 1D superconducting circuit architecture for 2-site Hubbard-Holstein model consisting of qubits coupled via resonators and superconducting quantum interference devices to emulate the spin representation of the 2-site Hubbard-Holstein model. The device consists of qubits ($Q_j$) coupled with resonators ($R_j$) using SQUIDs (double-crossed junctions) in a linear array.

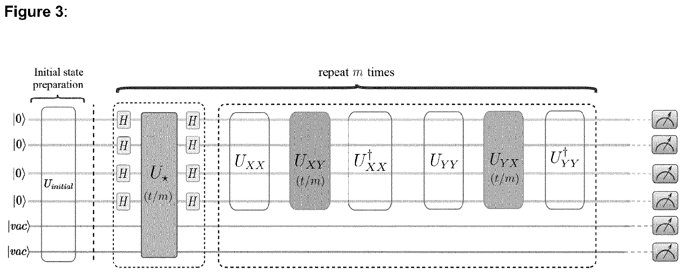

**Figure 3:** The schematic diagram of a digital-analog quantum computing protocol consisting of separate digital steps and analog blocks. The analog blocks are represented in grey. $U_*$ consists of electron-phonon coupling terms in Eq. 10 - 11.

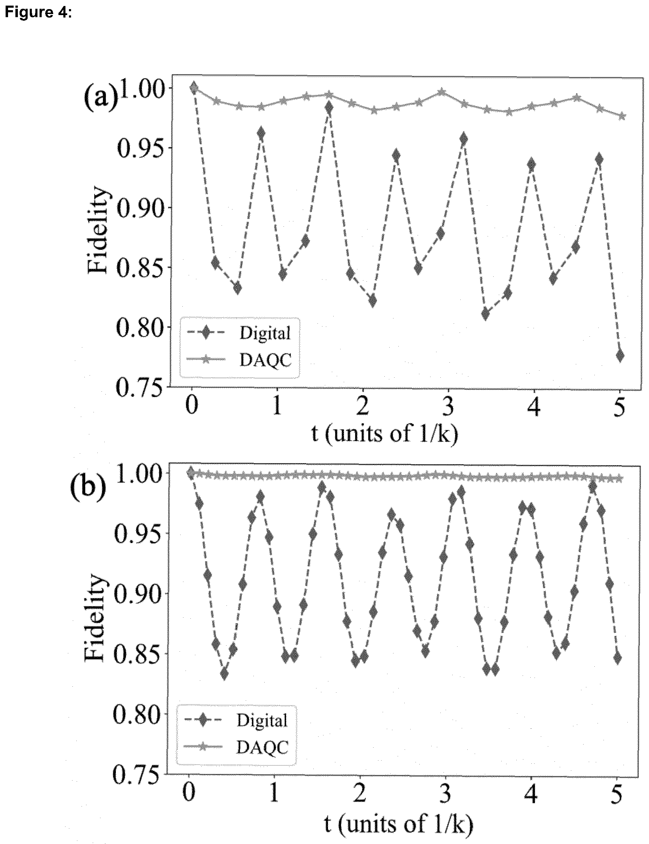

**Figure 4:** Fidelity, $\langle \psi_{exact} | \psi_{DAQS} \rangle$ vs time between the exact simulation and digital-analog quantum simulation (DAQS). The initial state is $|\psi_{qubit}\rangle = |+\rangle$, $|\psi_{res}\rangle = |0\rangle$ and the coupling parameters are $t = 0.5$, $U = 1$, $g = 0.5$ and $\omega_0 = 4$ (all in GHz).

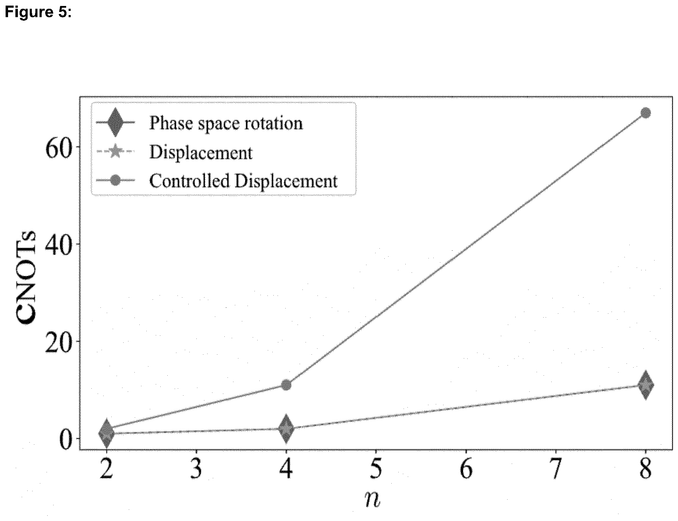

**Figure 5:** Fidelity, $\langle \psi_{exact} | \psi_{DAQS} \rangle$ as a function of time for 20 trotter steps with the system parameters, $t = 1$, $U = 2$ $t$, $g = 1$ $t$ and $\omega_0 = 8$ $t$. The initial state is half-filling, where each resonator is truncated to eight levels.

**Figure 6:** CNOTs required to perform each bosonic gate vs. the number of levels ($n$) for each bosonic mode for a pure digital approach.

**Examples**

**2-site 1D Hubbard-Holstein model**

The Hubbard-Holstein (HH) model is a generalized model of electron-phonon systems incorporating both the electron-phonon couplings and the coulomb interactions between the electrons. This model is a hybrid between the Hubbard model which excludes electron-phonon couplings ($g = 0$) and the Holstein model which excludes Coulomb repulsion between electrons ($U = 0$). Electron-phonon interaction is essential to manipulating charge and energy flow in various electronic, photonic, and energy conversion devices. These models are important tools regarding conventional superconductivity and charge modulation. For ideal 1-D systems, any electron-phonon coupling leads to a charge density wave.

The 1D Hubbard-Holstein model is described by the following Hamiltonian

$$H = -t\sum_{i,\sigma}\left(c_{i,\sigma}^\dagger c_{i+1,\sigma} + c_{i+1,\sigma}^\dagger c_{i,\sigma}\right) + U\sum_i n_{i\uparrow} n_{i\downarrow} + g\sum_{i,\sigma} n_{i\sigma}\left(a_i + a_i^\dagger\right) + \hbar\omega_0 \sum_i a_i^\dagger a_i,$$
(1)

where the fermionic operator $c_{i\sigma}^\dagger (c_{i\sigma})$ creates (annihilates) an electron with spin $\sigma \in \{\uparrow,\downarrow\}$ at the site $i$, $a_i^\dagger (a_i)$ is the phononic creation (annihilation) operator, and $n_{i\sigma} = c_{i\sigma}^\dagger c_{i\sigma}$ the electronic number operator. The first term in the Hamiltonian corresponds to the nearest-neighbor hopping of the electrons. $U$ represents the onsite Coulomb interaction between the electrons. The electron-phonon coupling strength is denoted by $g$ and $\hbar\omega_0$ corresponds to the energy of each phonon mode. From hereon we consider $\hbar = 1$. For 2 sites, the Hamiltonian can be written as

$$H_{2S} = -t\sum_{\sigma=\uparrow,\downarrow}(c_{1,\sigma}^\dagger c_{2\sigma} + c_{2,\sigma}^\dagger c_{1\sigma}) + U\sum_{i=1}^2 (n_i n_i) + \omega_0 \sum_{i=1}^2 (a_i^\dagger a_i) + g\sum_{i=1}^2 n_i(a_i + a_i^\dagger)$$
(2)

**Polarons and Bipolarons in the Hubbard-Holstein model**

Polarons are quasi-particles corresponding to the self-trapping of electrons by the lattice through the strong electron-phonon interaction. In this invention, digital-analog quantum computing is used for the quantum simulation of small polaron formation in the Hubbard-Holstein model using superconducting circuits.

**Mapping to spin model**

The Hubbard-Holstein model is mapped to the spin model to suppress the spin index in the Hamiltonian $H_{2S}$. The two-site Hubbard-Holstein model is represented in Fig.1 using spin representation. In the spin representation, each site is decomposed into two opposite spins, where onsite interactions are mediated via $\sigma^z\sigma^z$ interactions, while the intersite interactions are mediated via $\sigma^x\sigma^y$ interactions. By suppressing the spin index, the Hamiltonian can be written as

$$H_{2S} = -t\sum_{i=1}^2 \left(c_i^\dagger c_{i+2} + c_{i+2}^\dagger c_i\right) + U(n_1 n_2 + n_3 n_4) + \omega_0 \sum_{i=1}^2 (a_i^\dagger a_i)$$

$$+g\sum_{i=1(3)}\left[(n_i + n_{i+1})(a_i^\dagger + a_i)\right].$$
(3)

**Jordan-Wigner transformation**

Subsequently, the Jordan-Wigner transform is performed using the mapping of the fermionic operator

$$c_i \rightarrow \prod_{j=1}^{i-1} \sigma_j^z \sigma_i^-$$ , obtaining

$$c_i^\dagger c_{i+2} + c_{i+2}^\dagger c_i = \frac{1}{2}(\sigma_i^x \sigma_{i+1}^z \sigma_{i+2}^x + \sigma_i^y \sigma_{i+2}^z \sigma_{i+3}^y).$$

After the transformation, one can write the mapped HH model Hamiltonian as

$$H_{2S} = -\frac{t}{2}\sum_{j=2(3)}\left(U_j^x \sigma_{j-1}^x \sigma_j^y U_j^{x\dagger} - U_j^y \sigma_{j-1}^y \sigma_j^x U_j^{y\dagger}\right) + \frac{U}{4}\sum_j(\sigma_j^z \sigma_{j+1}^z + \sigma_j^z) \qquad +\omega_0 \sum_{j=1}^2 a_j^\dagger a_j +$$

$$g\sum_{j=1}^2 \left[(a_j + a_j^\dagger)\frac{(\sigma_j^z + 1)}{2}\right], \qquad (4)$$

where $U_j^{x(y)} = exp\left(-i\frac{\pi}{4}\sigma_j^{x(y)} \sigma_{j+1}^{x(y)}\right)$ are the multibody gates.

This target Hamiltonian was simulated using the superconducting architecture shown in Fig. 2.

**Superconducting circuit architecture**

$H_{2S}$ is the target Hamiltonian that was simulated using digital-analog quantum computing methods in the superconducting circuits platform. The two-site superconducting architecture to simulate the target Hamiltonian is represented in Fig. 2. Here, each site consists of two qubits (spins) interacting with a resonator (phonon) and coupled via a SQUID. The sites are coupled using another SQUID (black color). The Hamiltonian of this architecture can be obtained in certain embodiments via circuit quantization and rotating wave approximation in the interaction picture as

$$H = \sum_{j=1}^3 \frac{g^{(j)}}{4}\left((A_2 cos\varphi_2^{\sim(m)} - A_3 cos\varphi_3^{\sim(m)})\sigma_j^x \sigma_{j+1}^x - (A_2 sin\varphi_2^{\sim(m)}\right.$$
$$\left. + A_3 sin\varphi_3^{\sim(m)})\sigma_j^x \sigma_{j+1}^y\right.$$
$$\left. + (A_2 sin\varphi_2^{\sim(m)} - A_3 sin\varphi_3^{\sim(m)})\sigma_n^y \sigma_{n+1}^x + (A_2 cos\varphi_2^{\sim(m)} + A_3 cos\varphi_3^{\sim(m)})\sigma_n^y \sigma_{n+1}^y\right)$$
$$+ \sum_{m=1}^2 k^{(m)} a_m^\dagger a_m$$

$$+\frac{1}{2}\sum_{j=1}^4 \sum_{m=1}^2 l_m^{(j)}\{-\sigma_j^y(a_m^\dagger + a_m)(A_4 cos\varphi_4^{\sim(m)}) + \sigma_j^x(a_m^\dagger + a_m)(A_4 sin\varphi_4^{\sim(m)})\}$$
$$(5)$$

Herein, $A_i$ are the voltage amplitudes of the supplied external voltage to the device, as the external flux through the SQUIDs is to be composed of a DC signal and a small AC signal,

$$\varphi_{ext} = \varphi_{DC} + \varphi_{AC}(t), \qquad (6)$$

where $\varphi_{AC}(t) = \sum_{i=1}^7 A_i cos(v_i t + \varphi_i^\sim)$. $g^{(j)}$ are the coupling strength between the $j$the qubits, $k$ is the frequency of mth resonator and $l_m^{(j)}$ are couplings between $j$th qubit and $m$th resonator.

To simulate the target Hamiltonian H using the superconducting architecture, single qubit rotations and multibody gates are used to engineer the necessary interaction terms.

**1) Exchange interactions**

The tunnelling terms can be implemented using the following 3-body terms using multi-qubit gates

$$\sigma_{j-1}^x \sigma_j^z \sigma_{j+1}^x = U_j^x \sigma_{j-1}^x \sigma_j^y U_j^{x\dagger} \rightarrow R_{X_j,X_{j+1}} R_{X_{j-1},Y_j} R_{X_j X_{j+1}}^{\dagger},$$

(7)

$$\sigma_{j-1}^y \sigma_j^z \sigma_{j+1}^y = U_j^y \sigma_{j-1}^y \sigma_j^x U_j^{y\dagger} \rightarrow R_{Y_j,Y_{j+1}} R_{Y_{j-1},X_j} R_{Y_j,Y_{j+1}}^{\dagger}.$$

(8)

where $j$ denotes the qubit in the 1-D chain and $R_{Y(X)} = exp(-i\pi/4X)$.

**2) Coulomb interactions**

The onsite Coulomb interactions can be realized via the gate

$$\sigma_j^z \sigma_{j+1}^z = H_{j+1} H_j \sigma_j^x \sigma_{j+1}^x H_j H_{j+1} \rightarrow H_{j+1} H_j R_{X_j,X_{j+1}} H_j H_{j+1}.$$

(9)

where $H_j$ denotes the Hadamard gate on jth qubit.

**3) Electron-phonon interactions**

The analog blocks contain all the electron-phonon interaction terms save for a single qubit rotation, the analog block $U_A$ implements

$$U_A = exp(-1j[\tfrac{g}{2}\sum_{j=1}^2(\sigma_{2j}^x + 1 + \sigma_{2j+1}^x + 1)(a_j + a_{j+1}^\dagger)]\tau/\hbar).$$

(10)

The desired interaction is implemented by adding just a Hadamard gate acting on each qubit

$$\tfrac{g}{2}\sum_{j=1}^2(\sigma_{2j}^z + 1 + \sigma_{2j+1}^z + 1)(a_j + a_{j+1}^\dagger) \rightarrow \prod_j^4 H_j U_A \prod_j^4 H_j$$

(11)

**Trotterization**

To study the dynamics of a quantum state governed by the Hamiltonian $H$, a Trotterization method may be used, such as in this example. The Hamiltonian is decomposed into a sum of K-terms with at most k-local interactions, i.e. $H = \sum_{j=1}^K H_j$. Using the Suzuki-Trotter formula, the time evolution operator can be approximated as

$$e^{-iH\tau} \simeq (\prod_{j=1}^K e^{-iH_j\tau/n})^n + O(K^2\tau^2/n)$$

(12)

where $K$ is the number of Hamiltonian terms, $n$ is the number of trotter steps, and $\tau$ is the evolution time. The second term is the error in the approximation and can be reduced by increasing the number of trotter steps. Also, in some embodiments, higher order trotter approximation is used to further reduce the Trotter error.
The Trotter blocks can be summarized as follows:

**1) Exchange interactions**

$$e^{-iU_2^x \sigma_1^x \sigma_2^y U_2^{x\dagger} \tau} \to R_{X_2,X_3} R_{X_1,Y_2} R_{X_2,X_3}{}^\dagger, \tag{13}$$

$$e^{-iU_2^y \sigma_1^y \sigma_2^x U_2^{y\dagger} \tau} \to R_{Y_2,Y_3} R_{Y_1,X_2} R_{Y_2,Y_3}{}^\dagger, \tag{14}$$

$$e^{-iU_3^x \sigma_2^x \sigma_3^y U_3^{x\dagger} \tau} \to R_{X_3,X_4} R_{X_2,Y_3} R_{X_3,X_4}{}^\dagger, \tag{15}$$

$$e^{-iU_3^y \sigma_2^y \sigma_3^x U_3^{y\dagger} \tau} \to R_{Y_3,Y_4} R_{Y_2,X_3} R_{Y_3,Y_4}{}^\dagger, \tag{16}$$

where $U_j^{x(y)} = exp\left(-i\frac{\pi}{4}\sigma_j^{x(y)}\sigma_{j+1}^{x(y)}\right)$.

**2) Coulomb interactions**

$$e^{-i\sigma_1^z \sigma_2^z \tau} \to R_{Z_1,Z_2} \tag{17}$$

$$e^{-i\sigma_3^z \sigma_4^z \tau} \to R_{Z_3,Z_4} \tag{18}$$

$$e^{-i\sigma_1^z \tau} \to R_{Z_1}, \quad e^{-i\sigma_2^z \tau} \to R_{Z_2}, \quad e^{-i\sigma_3^z \tau} \to R_{Z_3}, \quad e^{-i\sigma_4^z \tau} \to R_{Z_4} \tag{19}$$

**Analog blocks**

The analog blocks comprise the terms

$$U_A = exp(-1i[\tfrac{g}{2}\textstyle\sum_j (a_{1(2)} + a_{1(2)}^\dagger)(\sigma_j^z + 1)]\tau/\hbar) \to H_j U_A H_j \tag{20}$$

where $H_j$ is the Hadamard gate acting on the jth qubit, and the terms $R_{X(Y)\square,Y(X)\square}$ can also be implemented analogically since they are provided by the hardware architecture.

These digital and analog blocks are summarized in Fig. 3.

For the simulation, we consider the dimensionless Hamiltonian $H/k\$$ and choose the timescale in units of $1/k$. For different materials, the range of parameters of the HH model Hamiltonian, such as $k$ and $U$ lie between 0.2 - 10 eV, $g$ is between 0 - 100 eV and $\omega$ lies in the range 0.01 - 1 eV, corresponding to which the physical timescale of the system is between *fs* to *ps*. Considering the microwave driving with the qubit and resonator frequencies in the range 5 - 10 *GHz*, the time for one trotter step for the digital blocks comprising the single and two-qubit gates are 10 - 500 *ns* while for the analog blocks comprising the bosonic and qubit-bosonic gates are around 72 *ns*. The initial states of the system are defined using the ordering of the Hilbert space as $|Q_1, Q_2, Q_3, Q_4, res_1, res_2\rangle$, where $Q_i$ and $res_i$ denote the qubit and resonator subspaces, respectively.

We investigate the fidelity and dynamics of the system by varying the values of $g$, $U$, and $k$. Fig. 4. shows the fidelity of the DAQC and pure digital simulation with respect to the exact simulation with the system initialized at half-filling. Clearly, the DAQC simulation outperforms the pure digital computation, evidently displaying an enhanced performance.

The digital simulation is carried out in certain embodiments using *Bosonic Qiskit*, where each resonator was truncated to *n* levels. This requires an order of $log_2 n$ number of digital gates each, apart from the gates required for the qubits. The terms $a^\dagger a$, $a^\dagger + a$, and $\sigma_z(a^\dagger + a)$ can be implemented using cv_r(), cv_d(), and cv_c_d () gates, respectively. This is provided by *Bosonic Qiskit* and corresponds to phase space rotation, displacement, and controlled displacement operators, respectively. When decomposed into digital gates, these bosonic gates can be realized using combinations of single qubit rotations $U3(\theta, \phi, \lambda)$ and CNOTs.

Since entangling gates are common in NISQ processors, the number of CNOTs required for each of these bosonic gates for a single trotter step is estimated. The CNOTs required per bosonic gate with increasing resonator levels (*n*) ar plotted in Fig. 5. The CNOTs required for the gates, cv_r() and cv_d(), grow equally.

**Claims**

1. Computer-implemented hybrid digital-analog method for determining a property of a material by performing a quantum simulation of a fermion-boson system using a superconducting circuit device, comprising

   - providing a target Hamiltonian for encoding an electron-phonon interaction system representing a property of the material,
   - mapping the target Hamiltonian into a 1D spin chain using a Jordan-Wigner transformation, wherein each spin is locally coupled to a resonator,
   - providing a superconducting circuit implementing a tunable interaction between spins and bosons as well as tunable exchange interactions between spins and
   - simulating the fermion-boson system using a digital-analog quantum algorithm,

   wherein the target Hamiltonian is simulated using the superconducting circuit by using the native spin-boson interaction of the superconducting circuit as analog blocks and using the tunable interactions between spins for constructing digital blocks in the form of single and multi-qubit gates, and

   - deriving therefrom the property of the material.

2. Method of claim 1, wherein the target Hamiltonian comprises tunnelling interactions, Coulomb repulsion, and/or individual electron and phonon terms, in particular a Hubbard-Holstein model, a Hubbard model, a Holstein model, or a Bose-Hubbard model.

3. Method of claim 1 or 2, wherein circuit elements of the 1superconducting circuit comprises qubits, resonators and/or SQUIDs, wherein a magnetic flux is supplied to the SQUIDs to control the interactions in the circuit.

4. Method of any of claims 1 to 3, a linear chain mapping of electron-phonon interactions is performed, in particular using the Jordan-Wigner transformation.

5. Method of any of claims 1 to 4, wherein a Hamiltonian of the superconducting circuit is provided that is decomposed into interactions that are used for the digital blocks and for the analog blocks.

6. Method of any of claims 1 to 5, wherein

   the interaction between the qubits and the resonators is used for the analog blocks, and is designed to be equal to the spin-boson interaction in the target Hamiltonian up to single qubit rotations, and
   the interactions between the qubits are used for the digital blocks in the form of single and/or multi-qubit gates.

7. Method of any of claims 1 to 6, wherein the interactions are

   exchange and/or Coulomb interactions comprising the digital blocks and
   bosonic and fermi-bosonic interactions comprising the analog blocks.

8. Method of any of claims 1 to 7, wherein the superconducting circuit is a 1D superconducting circuit.

9. Method of any of claims 1 to 8, wherein the property of the material is selected from the group consisting of transport properties, correlation effects, polaron formation, bipolaron formation and localization phenomena.

10. A computer program having a program code for performing the method of any of claims 1 to 8, when the computer program is executed on a computer, a processor, a quantum-processing unit and/or a programmable hardware component.

11. A computation device comprising: an interface for communicating with a quantum-processing unit; and one or more processors configured to perform the method of any of claims 1 to 8 using the quantum-processing unit.

12. Use of a superconducting state for quantum computation with superconducting circuits, in particular in a method of any of claims 1 to 8.

13. Superconducting circuit device for investigating a property of a material, in particular by performing a quantum simulation of a fermion-boson system,
wherein the superconducting circuit device comprises:
qubits, resonators and/or SQUIDs, wherein a magnetic flux is supplied to the SQUIDs to control the interactions in the circuit.

**Figure 1**:

**Figure 2**:

**Figure 3**:

**Figure 4:**

**Figure 5:**

Europäisches
Patentamt
European
Patent Office
Office européen
des brevets

## EUROPEAN SEARCH REPORT

Application Number

EP 23 21 3981

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU J ET AL: "Superconducting Circuit Architecture for Digital-Analog Quantum Computing", ARXIV.ORG, CORNELL UNIVERSITY LIBRARY, 201 OLIN LIBRARY CORNELL UNIVERSITY ITHACA, NY 14853, 14 May 2022 (2022-05-14), XP091213062, DOI: 10.1140/EPJQT/S40507-022-00129-Y | 13 | INV. G06N10/40 ADD. G06N10/20 |
| Y | * page 1 - page 35 * | 1-12 | |
| Y | A. MEZZACAPO: "Digital Quantum Simulation of the Holstein Model in Trapped Ions", PHYSICAL REVIEW LETTERS, vol. 109, no. 20, 13 November 2012 (2012-11-13), XP093162916, US ISSN: 0031-9007, DOI: 10.1103/PhysRevLett.109.200501 | 1-12 | |
| A | * pages 200501-1 - pages 200501-4, right-hand column, paragraph 3 * | 13 | TECHNICAL FIELDS SEARCHED (IPC) |
| A | ZOHREH DAVOUDI ET AL: "Toward simulating quantum field theories with controlled phonon-ion dynamics: A hybrid analog-digital approach", ARXIV.ORG, CORNELL UNIVERSITY LIBRARY, 201 OLIN LIBRARY CORNELL UNIVERSITY ITHACA, NY 14853, 19 April 2021 (2021-04-19), XP081940959, * page 1 - page 18, right-hand column, paragraph 1 * | 1-13 | G06N |
| A | WO 2021/062331 A1 (ZAPATA COMPUTING INC [US]) 1 April 2021 (2021-04-01) * the whole document * | 1-13 | |

-/--

The present search report has been drawn up for all claims

| Place of search | Date of completion of the search | Examiner |
|---|---|---|
| The Hague | 16 May 2024 | Volkmer, Markus |

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | SHUBHAM KUMAR ET AL: "Digital-analog quantum computing of fermion-boson models in superconducting circuits", ARXIV.ORG, CORNELL UNIVERSITY LIBRARY, 201 OLIN LIBRARY CORNELL UNIVERSITY ITHACA, NY 14853, 23 August 2023 (2023-08-23), XP091598656, * the whole document * | 1-13 | |

TECHNICAL FIELDS
SEARCHED      (IPC)

The present search report has been drawn up for all claims

| Place of search | Date of completion of the search | Examiner |
|---|---|---|
| The Hague | 16 May 2024 | Volkmer, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
### ON EUROPEAN PATENT APPLICATION NO.

EP 23 21 3981

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2024

| Patent document cited in search report | | Publication date | Patent family member(s) | | Publication date |
|---|---|---|---|---|---|
| WO 2021062331 | A1 | 01-04-2021 | CA | 3151055 A1 | 01-04-2021 |
| | | | EP | 4022530 A1 | 06-07-2022 |
| | | | US | 2021272002 A1 | 02-09-2021 |
| | | | WO | 2021062331 A1 | 01-04-2021 |

EPO FORM P0459